# EUROPEAN PATENT APPLICATION

(11) **EP 3 447 468 A1**
(43) Date of publication of application: **27.02.2019**
(21) Application number: 17306094.8
(22) Date of filing: 24.08.2017
(51) Int. Cl.: G01M 11/02

(54) **APPARATUS FOR TESTING ANTI-REFLECTION LENSES PERFORMANCES**

(71) Applicant: Essilor International, 94220 Charenton-le-Pont (FR)
(72) Inventor: KSIKES, Hajar, 94220 CHARENTON-LE-PONT (MA); NADOLNY, Carole, 94220 CHARENTON-LE-PONT (FR); MAURY, Hélène, 94220 CHARENTON-LE-PONT (FR); PUECH, Florian, 75011 PARIS (FR)
(74) Representative: Allain, Laurent

(57) **Abstract**

The invention relates to an apparatus (1) for testing anti-reflection lens (25, 26, 27) performance, comprising:
- reflection means (4) in which an individual can look at himself, and
- a device intended to create reflected beams, said device comprising:
• a light source (20),
• an image (21) which is illuminated by said light source (20) in order to generate reflected beams, and

- a frame (22) intended to be worn by an individual, the frame comprising at least a lens (25, 26, 27), at least one of the lens (25, 26) or a part of the lens (27) having undergone an anti-reflection treatment,
the apparatus (1) comprising a first part (2) including said reflection means (4) and a second part (3) including said device, wherein said frame (22) is independent of said first and second parts (2, 3).

## Description

The invention relates to an apparatus for testing anti-reflection lenses performances.

A current trend in the domain of the frames equipped with lens(es), consists in improving said lens(es) performances with an anti-reflection treatment. An apparatus pursuant to the invention is designed to allow a direct comparison between two visualizations performed with two lenses having two different anti-reflection performances. Thus, these two lenses may have undergone two different anti-reflection treatments, or one lens has undergone an anti-reflection treatment while the other lens has not undergone any antireflection treatment. Generally, the two visualizations are simultaneous and are performed with the two lenses on a same frame.

As an example, the French patent application FR 2 959 815 discloses an apparatus for making a comparison between a visualization performed with a lens having undergone a first anti-reflection treatment, and a visualization performed with a lens having undergone a second anti-reflection treatment that is different from the first one. A frame comprising the two lenses is fixed to the apparatus. The apparatus also comprises a mirror. The individual looks through the lenses at himself through the mirror. Although such an apparatus is compact, it presents the great disadvantage to force the individual to adopt only one binding posture, because the frame is fixed to the apparatus. Indeed, there is a specific location in the apparatus which is provided to receive the lenses allowing the individual to look at himself through the mirror. There is no possibility for the wearer to adopt a natural and comfortable posture to look at himself, and to find the best posture to make the comparison between the two lenses, in the best conditions.

An apparatus pursuant to the invention allows to test a lens having two different anti-reflection performances or two lenses having two different anti-reflection performances, while freeing all the disadvantages found in the prior art.

An object of the invention is an apparatus for testing anti-reflection lens performance, comprising:
- reflection means in which an individual can look at himself, and
- a device intended to create reflected beams, said device comprising:
   - a light source,
   - an image which is illuminated by said light source in order to generate reflected beams, and
- a frame intended to be worn by an individual, the frame comprising at least a lens, at least one of the lens or a part of the lens having undergone an anti-reflection treatment,
the apparatus comprising a first part including said reflection means and a second part including said device, wherein said frame is independent of said first and second parts.

The general principle of such an apparatus consists in creating and directing light beams at an image placed in the apparatus. Said image reflects on frames equipped with lens(es) having different anti-reflection performances

In a first embodiment, the frame comprises a first lens with a first anti-reflection treatment, a second lens with a second anti-reflection treatment different from the first anti-reflection treatment, or with no anti-reflection treatment at all.

In a second embodiment, the frame comprises a single lens. A part of the single lens has a first anti-reflection treatment, another part of the single lens has a second anti-reflection treatment different from the first anti-reflection treatment, or has no anti-reflection treatment at all.

The "lens" wording is very general and corresponds to an optical part designed to fit a frame so as to protect the eye and/or correct the sight and can be non corrective (also called piano or afocal lens) or corrective.

In both embodiments, the frame is worn by an individual. The light beams bring additional contrast to the image, and therefore, the reflection of such image appears clearly on the lens(es) as if it was projected on a screen. The individual wearing said frame and looking at himself with the reflection means (for instance a mirror) will see on the lens(es) the reflection of said image. Finally, the difference of anti-reflection performances between the two lenses or the parts of the single lens can be perceived and compared by said individual who observes the reflections obtained on the lens(es) and by looking at himself. In such manner, such an apparatus is designed to allow an individual to wear the frame equipped with the lens(es) and to look freely at himself in a comfortable posture, which is independent of the features of the first and the second parts. He can freely adjust his posture to assess in the best conditions, the difference of anti-reflection performances between the two lenses or the two parts of a single lens. The term "independent" means that the frame with the lens(es) is not physically linked to any of the first and second parts, in other words: the frame can be moved freely in any orientation relative to any of the first and second parts. Moreover, such an apparatus allows the individual to test the anti-reflection treatment of the lens(es) with different angles of incidence of the reflected beams, and in particular with wide angles of incidence, for example comprised in the range between 20° and 60°. Indeed, the wearer is free to move his head and thus the lens(es), which vary the angle of observation.

It is advantageously supposed that in the closing position, the first and the second parts form a compact housing which can be easily handled and transported. In the closing position, none of the elements (reflection means, light source, the image) is accessible. According to one embodiment of the invention, the light source is automatically turned on, by the opening of the first part on the second part. According to another embodiment of the invention, the frame is stored in a compartment of the apparatus, and the removal of said frame from said compartment, automatically turns on the light source. The light source is intended to illuminate the image so as to create light reflected beams, which are intended to hinder the sight of an individual looking at himself through the reflection means. The reflection means are constituted by all means capable to return the image of the individual face, towards the eyes of said individual. The lenses or the two parts of the single lens of the frame have very different anti-reflection performances so that an individual cannot confuse the two lenses or the two parts of the single lens in terms of anti-reflection efficiency. The two lenses or the two parts of the single lens can be indifferently corrective or not corrective. The image, which can be for example constituted by a text, serves as a reflecting or semi-reflecting plan, which is able to reflect at least a part of the incident light beams coming from the light source.

The "frame" wording is very general and may designate an element to be chosen among:
- pairs of spectacles comprising arms and circles designed to receive lenses,
- lorgnettes (comprising lenses without any branch),
- a mask comprising one lens covering the two eyes of an individual, said lens comprising two distinctive areas facing the eyes and having two different anti-reflection performances.

The frames may be worn alone (like testing frames) or in addition to classical pairs of spectacles with corrective lenses, when said frames are lorgnettes.

The wording "worn" corresponds both to the situation where the frame lies on the nose of an individual, and to the situation where the frame is maintained in front of the eyes of said individual.

An apparatus pursuant to the invention allows an individual to perform himself the test of comparing the two anti-reflection capabilities of the frame. It also allows an external observer to perform said test by facing the individual and looking at the lens(es) of said individual.

According to a possible embodiment of the invention, the second part is articulated mounted on the first part between a closing position and an opening position.

According to a possible embodiment of the invention, the first part constitutes a base and the second part constitutes a cover, and the second part is mounted on the first part by means of at least one hinge. Advantageously, the second part is articulated mounted on the first part by means of two hinges. The closing position could be considered as a storage or transport position, while the opening position is an operational position.

According to a possible embodiment of the invention, the first part and the second parts form a parallelepipedal assembly in the closing position, the second part being intended to be above the first part. In an operational configuration, the assembly comprising the first and the second part, is put on a plane surface which is generally horizontal, the first part being in contact with said surface. Then, it is easy to make rotate the second part on the first part to access the different elements necessary to perform the test. Advantageously, a parallelepipedal form can be considered as a compact form which can be easily handled and/or transported.

According to a possible embodiment of the invention, in the closing position, the first and the second parts are in contact by means of an interface plane which is inclined compared to a plane surface on which the first part would be posed. This way, the interface plane on which reflection means and device are located is greater than a plane which would be parallel to the plane surface on which the second part would be posed. This allows the apparatus to be more compact.

According to a possible embodiment of the invention, the second part rotates relatively to the first part to pass from the closing position to the opening position, and wherein the surface of the first and the second parts which were in contact in the closing position to form the interface plane, are in continuity one another in the opening position in a plane that is parallel to the interface plane. This way, the second part stops its rotational move, one time it is in contact with the surface on which the first part is put. With such a configuration, the opening movement of the second part is well mastered and is performed always in the same conditions. The surface on which the first part is put, plays the role of an abutment which stops the rotational move of the second part.

According to a possible embodiment of the invention, the reflection means in which an individual can look at himself is a mirror.

According to another possible embodiment of the invention, the refection means in which an individual can look at himself, is a communicating portative electronic device. Such a device could be advantageously represented by a tablet or a smartphone, which is generally equipped with a camera placed on the same side than the display screen.

According to a possible embodiment of the invention, the image lies on a plane and the light source is extended along said image so as to create a multiplicity of reflected light beams with different reflection angles. With such a configuration, the apparatus pursuant to the invention is complete and performant, because it allows to perform a comparative test between two lenses or two parts of a single lens having different anti-reflection performances, in the best conditions of reflected light beams emission. Such a configuration aims to closely simulate the conditions of reflected light beams which can be encountered in the real life. With a plurality of reflected light beams, emitted with different reflection angles, an individual may really assess the anti-reflection performance of the lens (es) of the frame.

According to a possible embodiment of the invention, the light source lies in a plane which is different from the plane of the image. Preferably, these two planes are perpendicular.

According to a possible embodiment of the invention, the light source is disposed in a recessed part so as to avoid direct lighting of the lens(es). In such a configuration, the reflection of the image on the lenses is not masked by a more luminous direct reflection of the light source.

According to a possible embodiment of the invention, the image comprises at least one element to be chosen among a text with letters and/or figures, and repetitive pattern. The image can be removable so as to be replaced by another image. What is really important, is that the image can reflect cleanly and with accuracy the incident light beams coming from the light source.

According to a possible embodiment of the invention, the light source comprises at least a LED's source, preferably a plurality of LED's sources. With such point light sources, it is easy to make vary the general geometry and the sizes of the resulting light source.

According to a possible embodiment of the invention, the second part comprises a compartment intended to receive a battery for feeding in electricity the light source. The assembly comprising the first and the second parts is thus completely autonomous, and can be used anytime and everywhere, without any constraints linked to the presence of an external electricity source.

According to a possible embodiment of the invention, the second part comprises gripping means so as to facilitate the transportation of the assembly comprising the first and the second parts. An apparatus pursuant to the invention is preferably portative, and thus is equipped with means intended to facilitate the handling and the transportation of said apparatus.

According to a possible embodiment of the invention, the second part comprises attachment means to maintain at least one frame against the image when said frame is unused. Since the frame equipped with the lens(es) is part of the apparatus, said apparatus must contain said frame, especially during its transportation. One mean for preventing the forgetting of the frame, is to bring together said frame and the assembly comprising the first and the second parts. Some examples of such attachment means could be a strap or a magnet. Of course, several frames can be also maintained against the image by the strap. Moreover, said magnet could be designed as a switch, which would turn on the light source when the frame would be removed from the compartment of the apparatus.

Another object of the invention is a method for using an apparatus according to the invention, said method comprising the following step,
- a step of turning on the light source to illuminate the image,
- a step of wearing the frame,
- a step of looking at the reflection means, optionally with different angles of incidence, and
- a step of evaluating the different anti-reflection performances of the lens (es) of the same frame.

An apparatus pursuant to the invention presents the advantage to be of compact shape which makes it easy to handle and to transport. Moreover, it has the advantage to be complete and reliable, because it allows checking in a realistic manner, the anti-reflection performances of lenses by means of a plurality of light beams emitted with different reflection angles. It presents also the advantage for an individual to test himself the different anti-reflection performances of lenses, or to be assisted by an external observer which could look at the lenses of said individual looking at himself through the reflection means.

We give hereafter a detailed description of a preferred embodiment of an apparatus pursuant to the invention, by referring to the following figures.
- Figure 1A is a perspective view of an apparatus pursuant to the invention in a closing position,
- Figure 1B is a side view of the apparatus of figure 1A,
- Figure 2 is a perspective view of an apparatus pursuant to the invention in an opening position, the lorgnette being stored inside said apparatus,
- Figure 3 is a perspective view of the apparatus of the figure 1B, the lorgnette being outside the apparatus,
- Figure 4 is a perspective view of another embodiment of an apparatus pursuant to the invention in an opening position,
- Figure 5 is an enlarged face view of the second part of the apparatus of figure 4,
- Figures 6A and 6B are face views of two examples of lorgnettes with two lenses of an apparatus pursuant to the invention,
- Figure 6C is face view of an example of lorgnette with a single lens of an apparatus pursuant to the invention,
- Figure 7 is a perspective view of an apparatus pursuant to the invention and of an individual looking at himself through said apparatus.

An apparatus pursuant to the invention aims to allow an individual to compare simultaneously two lenses or two parts of a single lens having different anti-reflection performances.

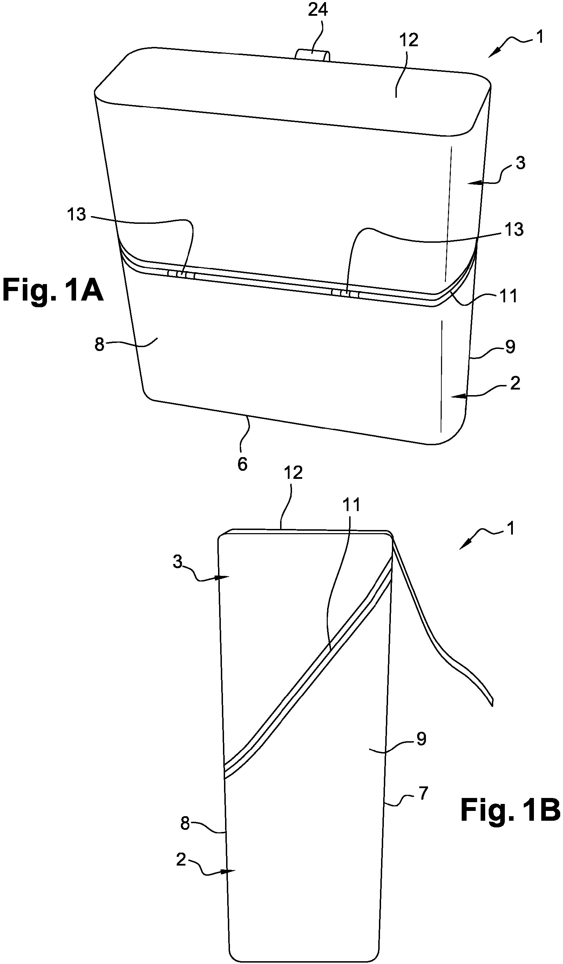

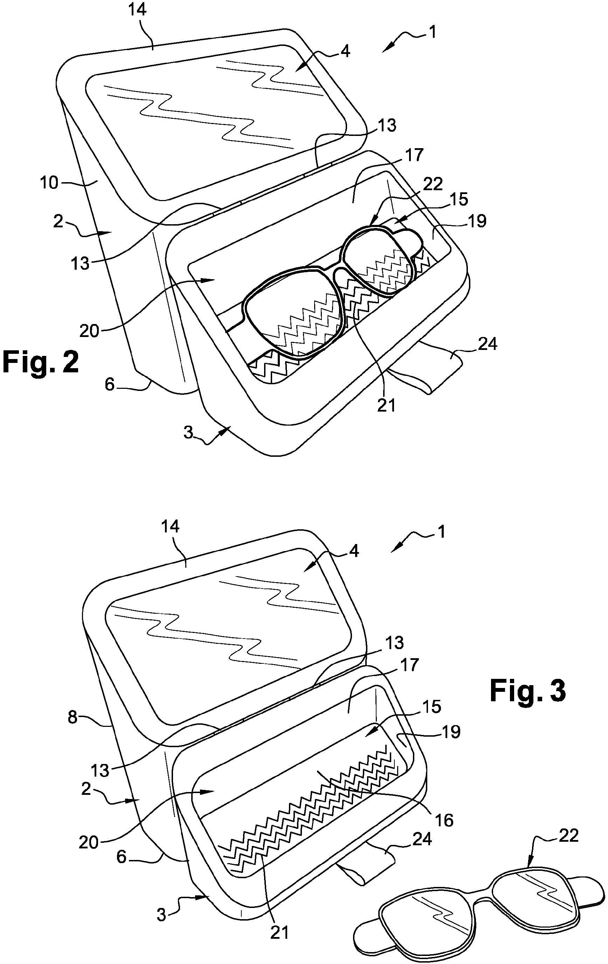

Referring to figures 1A and 1B, an apparatus 1 pursuant to the invention comprises two main parts 2, 3, a first part 2 comprising reflection means 4 and a second part 3 comprising a device 5 intended to create reflected beams. The second part 3 is articulated mounted on the first part 2 between a closing position as illustrated in figures 1A and 1B, and an opening position as illustrated in figures 2, 3, 4, 5.

Referring to figures 1A, 1B and 2, the first part 2 comprises a rectangular wall similar to a bottom 6, a first pair of parallel walls 7, 8 and a second pair of parallel walls 9, 10. The walls 7, 8 of the first pair extend along the long side of the bottom 6 whereas the walls 9, 10 of the second pair extend along the small sides of said bottom 6. Each wall 7, 8 of the first pair is of rectangular shape, one wall 7 having a greater height than the one of the other wall 8. The walls 9, 10 of the second pair are identical and are each delimited by a first edge in the continuity of the bottom 6, a second edge in the continuity of the shorter wall 8 of the first pair, a third edge in the continuity of the longer wall 7 of the first pair, and a fourth edge connecting an extremity of said longer wall 7 and an extremity of said shorter wall 8.

The second part 3 has a complementary shape in regard with the first part 2 shape, to form a resulting assembly which is parallelepipedal in the closing position as illustrated in figures 1A and 1B. When the apparatus 1 lies on a horizontal external surface, the second part 3 is above the first part 2 in the closing position, said parts 2, 3 being in contact one another by means of an interface plane 11 which is inclined compared to said horizontal external surface. In other words, in the closing position, the second part 3 presents an upper horizontal wall 12 which is parallel to the bottom 6 of the first part 2, and the interface plane 11 is inclined relative to these two parallel walls 6, 12. It is important to notice that an apparatus 1 pursuant to the invention can be used on an external surface that is not horizontal.

Referring to figures 1A, 2, 3, 4 and 5, the second part 3 is articulated mounted on the first part 2 by means of two hinges 13 placed along the same edge of the interface plane 11. With such hinges 13, the second part 3 rotates relatively to the first part 2 to pass from the closing position as shown in figures 1A and 1B to the opening position as illustrated in figures 2, 3, 4, 5. More precisely, the surface of the first part 2 and the surface of the second part 3 which were in contact in the closing position to form the interface plane 11, are in continuity one another in the opening position, in a plane that is sensibly parallel to the interface plane 11. This way, the second part 3 stops its rotational move, one time it is in contact with the surface on which the first part 2 is put. With such a configuration, the opening movement of the second part 3 is well mastered and is performed always in the same conditions. The surface on which the first part is put, plays the role of an abutment which stops the rotational move of the second part 3. The angular amplitude of the rotation allowing the apparatus to pass from the closing position to the opening position is equal to 180° plus or minus 15°.

In a variant, the second part 3 comprises several stop means enabling to stop the rotational move of the second part 3 at different angular amplitudes. This allows the individual to better adjust the direction of the reflected beams coming from the device of the second part 3.

Referring to figures 2, 3, 4 and 5, the inclined upper wall 14 of the first part 2 which forms the interface plane 11 with another inclined wall of the second part 3, is constituted by the reflection means 4 allowing an individual to look at himself. This reflection means 4 is preferably composed by a mirror, but can be also represented by a communicating portative electronic device, like for example a tablet or a smartphone, which is generally equipped with a camera placed on the same side than a display screen. The position of the reflection means 4 is irremovable. An inclined position for the mirror 14, is suitable to allow an individual to look easily at his face, in a comfortable posture.

Referring to figures 2, 3, 4, 5 the internal part of the second rotative part 3 of the apparatus 1, comprises a recess 15 delim ited by a bottom 16, a longitudinal wall 17 and two parallel lateral walls 18, 19. The longitudinal wall 17 joins the two lateral walls 18, 19 by extending perpendicularly to said lateral walls 18, 19. A light source 20, advantageously composed of a plurality of LED's sources, is implemented in said longitudinal wall 17 and in said lateral walls, 18, 19, and extends along the whole length of said walls 17, 18, 19. With such point light sources, it is easy to make vary the general geometry and the sizes of the resulting light source 20. An image 21 lies on the bottom 16 of the recess 15 and is illuminated by the light source 20 in order to generate reflected beams. The image 21 which may be represented, for example, by a text with letters and/or figures, or by repetitive patterns, serves as a reflecting or semi-reflecting plane, which is able to reflect at least a part of the incident light beams coming from the light source 20. According to a possible embodiment of an apparatus 1 pursuant to the invention, the light source 20 is turned off when the apparatus 1 is in the closing position, and the opening of said apparatus causes directly the lightning of said light source 20. II is supposed that an electrical battery is stored in the first part 2 or in the second part 3 of the apparatus 1, so as to feed in electricity the light source 20. A hatch allows access to the battery to change it, if necessary.

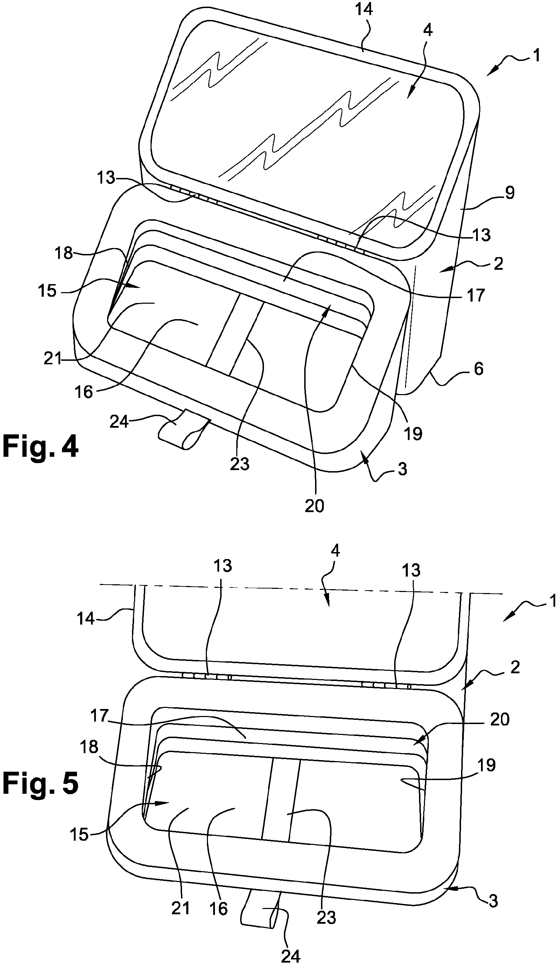

Referring to figures 4 and 5, the second part 3 comprises attachment means to maintain at least one lorgnette 22 against the image 21 when said lorgnette 22 is unused. Since the lorgnettes 22 equipped with two lenses 25, 26 is part of the apparatus 1, said apparatus 1 must contain said lorgnettes 22, especially during its transportation. One mean for preventing the forgetting of the lorgnettes 22, is to attach said lorgnettes 22 inside the apparatus 1. These attachment means can be preferably represented by a strap 23 crossing the recess 15 parallelly to the two lateral walls 18, 19. More precisely, the strap 23 passes through a central axis of the recess 15 by lying on the image 21. This way, the lorgnettes 22 can be inserted between said strap 23 and the image 21. The strap 23 extends outwardly the second rotative part 3 by forming an external loop 24, which acts as a gripping element. Hence an individual intending to use the apparatus 1, catches the loop 24 with his fingers, before exerting a traction effort on said loop 24 in order to make rotate the second part 3 on the first part 2, up to the opening position.

Referring to figures 2 and 3, in another embodiment of an apparatus 1 pursuant to the invention, the attachment means can be represented by a magnet. In this case, said magnet could be advantageously designed as a switch, which automatically turns on the light source 20 when the lorgnettes 22 are separated from said magnet. In figure 2, the lorgnette 22 is maintained against the magnet and the light source is turned off. In figure 3, the lorgnette 22 has been taken out of the apparatus 1, and thus the light source 20 has been immediately turned on. In this embodiment, the apparatus 1 has always a strap loop 24 as gripping element to easily make rotate the second part 3 relatively to the first part 2.

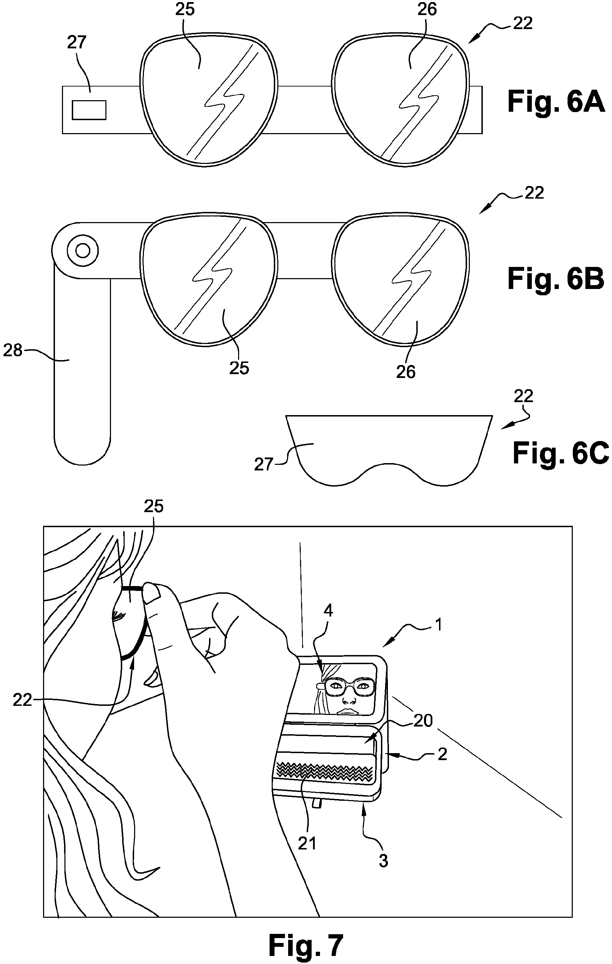

Referring to figures 6A and 6B, a lorgnette 22 of an apparatus 1 pursuant to the invention comprises two lenses 25, 26 having two different anti-reflection performances. A lorgnette 22 thus may comprise two lenses 25, 26 having undergone two different anti-reflection treatments, or may comprise a lens having undergone a specific anti-reflection treatment and a lens having undergone none anti-reflection treatment.

Referring to figure 6C, a lorgnette 22 of an apparatus 1 pursuant to the invention comprises a single lens 27 having two different areas where anti-reflection performances are different. A lorgnette 22 thus may comprise a single lens 27 having undergone a first anti-reflection treatment on a first part of the single lens and a second anti-reflection treatment different from the first anti-reflection treatment, or no anti reflection treatment, on a second part of the single lens.

Referring to figure 6A, a lorgnette 22 may for example comprise a lateral gripping arm 27 extending parallelly to an axis joining the two lenses 25, 26.

Referring to figure 6B, a lorgnette 22 may for example comprise a lateral gripping arm 28 extending perpendicularly to an axis joining the two lenses 25, 26.

An apparatus 1 pursuant to the invention allows an individual to assess the anti-reflection performance of a lens 25, 26, 27 of the lorgnette 22, by a direct and simultaneous comparison with the anti-reflection performance of the other lens 25, 26 of the lorgnette 22 or the different parts of the single lens 27 of the lorgnette 22.

A method for using an apparatus 1 according to the invention comprises the following steps (it is advantageously supposed that said steps are carried out by an individual intended to assess himself the anti-reflection lenses capability):
- A step of putting the apparatus 1 on an external surface which is preferably horizontal (not necessary),
- A step of opening the apparatus by using the loop 24 of the strap 23 in order to make rotate the second part 3 on the first part 2,
- A step of removing the lorgnette 22 from the second part 3 of the apparatus 1, causing immediately the light to be turned on,
- A step of wearing the lorgnette 22 as shown in figure 7. If the individual wears already spectacles with corrective lenses, then he superimposes the lorgnette 22 on said spectacles,
- A step of looking at himself through the mirror 4, by freely adopting the suitable comfortable posture as illustrated in figure 7. During this step, the reflected image is identified on the lenses
- A step of assessing simultaneously the different antireflection performances of the lenses 25, 26, 27 of the lorgnette 22.

## Claims

1. Apparatus (1) for testing anti-reflection lens (25, 26, 27) performance, comprising:
- reflection means (4) in which an individual can look at himself, and
- a device intended to create reflected beams, said device comprising:
• a light source (20),
• an image (21) which is illuminated by said light source (20) in order to generate reflected beams, and
- a frame (22) intended to be worn by an individual, the frame comprising at least a lens (25, 26, 27), at least one of the lens (25, 26) or a part of the lens (27) having undergone an anti-reflection treatment,
the apparatus (1) comprising a first part (2) including said reflection means (4) and a second part (3) including said device, wherein said frame (22) is independent of said first and second parts (2, 3).

2. Apparatus according to claim 1, wherein said second part (3) is articulated mounted on said first part (2) between a closing position and an opening position.

3. Apparatus according to claim 2, wherein the first part (2) and the second part (3) form a parallelepipedal assembly in the closing position, the second part (3) being intended to be above the first part (2).

4. Apparatus according to claim 3, wherein in the closing position, the first and the second parts (2, 3) are in contact by means of an interface plane (11) which is inclined compared to a plane surface on which the first part (2) would be posed.

5. Apparatus according to claim 4, wherein the second part (3) rotates relatively to the first part (2) to pass from the closing position to the opening position, and wherein the surface of the first and the second parts (2, 3) which were in contact in the closing position to form the interface plane (11), are in continuity one another in the opening position, in a plane that is parallel to the interface plane (11).

6. Apparatus according to any one of claims 1 to 5, wherein the reflection means (4) in which an individual can look at himself is a mirror.

7. Apparatus according to any one of claims 1 to 5, wherein the reflection means (4) in which an individual can look at himself is a communicating portative electronic device.

8. Apparatus according to any one of claims 1 to 7, wherein the image (21) lies on a plane and wherein the light source (20) is extended along said image (20) so as to create a multiplicity of reflected light beams with different reflection angles.

9. Apparatus according to any one of claims 1 to 8, wherein the light source (20) lies in a plane which is different from the plane of the image (21).

10. A method for using an apparatus according to any one of claims 1 to 9 comprising the following steps:
- a step of turning on the light source (20) to illuminate the image (21),
- a step of wearing the frame (22),
- a step of looking at the reflection means (4), optionally with different angles of incidence, and
- a step of evaluating the different anti-reflection treatments of the lens(es) (25, 26, 27) of the same frame (22).
